Europäisches Patentamt

European Patent Office

Office européen des brevets

(11) Veröffentlichungsnummer: **0 085 787**
**B1**

(12) **EUROPÄISCHE PATENTSCHRIFT**

(45) Veröffentlichungstag der Patentschrift: **15.06.88**

(21) Anmeldenummer: **82111997.1**

(22) Anmeldetag: **24.12.82**

(51) Int. Cl.⁴: **G 01 D 5/26, G 01 B 21/02**

(54) **Messeinrichtung.**

(30) Priorität: **05.02.82 DE 3204012**

(43) Veröffentlichungstag der Anmeldung:
**17.08.83 Patentblatt 83/33**

(45) Bekanntmachung des Hinweises auf die
Patenterteilung:
**15.06.88 Patentblatt 88/24**

(84) Benannte Vertragsstaaten:
**AT CH FR GB IT LI NL SE**

(56) Entgegenhaltungen:
**FR-A-2 323 983**
**US-A-4 400 890**

(73) Patentinhaber: **Dr. Johannes Heidenhain GmbH**
**Nansenstrasse 17**
**D-8225 Traunreut (DE)**

(72) Erfinder: **Affa, Alfred, Ing. (grad.)**
**Hochfellnstrasse 6**
**D-8221 Stein (DE)**

Courier Press, Leamington Spa, England.

EP 0 085 787 B1

**Beschreibung**

Die Erfindung betrifft eine Meßeinrichtung gemäß dem Oberbegriff des Anspruches 1.

Eine inkrementale Meßeinrichtung weist einen Maßstab auf, der aus einem Stück bestehen oder aus Einzelstücken zusammengesetzt sein kann (DE—PS 16 98 006).

Bei einer derartigen Meßeinrichtung können Steuerimpulse auf verschiedene Weise verwertet werden, z.B. zum Reproduzieren der Nullposition im Zähler, zum Anfahren einer bestimmten Position zu Beginn der Messung und zur Kontrolle von Störimpulsen sowie zur Beaufschlagung einer nachgeschalteten Steuereinrichtung.

Aus der DE—AS 25 40 412 ist es bekannt, auf dem Maßstab bereits bei der Teilungsherstellung in zueinander festgelegten Abständen eine Reihe von Referenzmarken vorzusehen und mindestens ein Auswahlelement auf dem Maßstab selbst oder in dessen unmittelbarer Nähe anzuordnen; eine oder mehrere Referenzmarken können ausgewählt und jeweils in Wirkzusammenhang mit einem Schaltmittel gebracht werden, indem jeder Referenzmarke, die beim Meßvorgang zur Wirkung gelangen soll, ein Magnet zugeordnet ist, der beim Vorbeibewegen der Abtasteinheit den darauf angebrachten elektrischen Schalter ansteuert, dessen elektrischer Ausgang zusammen mit dem elektrischen Ausgang der Abtasteinheit an eine elektronische Baueinheit gelegt ist, die an ihrem Ausgang nur dann einen Steuerimpuls abgibt, wenn gleichzeitig am Ausgang der Abtasteinheit und am Ausgang des Schalters ein elektrisches Signal anliegt.

Jedes in Bewegungsrichtung der Abtasteinheit verschiebbare Auswahlelement muß bezüglich der jeweils ausgewählten Referenzmarke in einer reproduzierbaren Lage fixierbar sein.

Der Erfindung liegt die Aufgabe zugrunde, bei einer Meßeinrichtung der oben genannten Gattung eine einfache Fixierung der Lage eines Auswahlelements zur jeweiligen Referenzmarke anzugeben.

Diese Aufgabe wird erfindungsgemäß durch die kennzeichnenden Merkmale des Anspruchs 1 gelöst.

Die mit der Erfindung erzielten Vorteile bestehen insbesondere darin, daß die vorgeschlagene Fixierung der Lage eines Auswahlelements zu einer Referenzmarke nicht verschleißbehaftet und einfach in der Herstellung ist sowie eine sichere Zuordnung des Auswahlelements zur Referenzmarke erlaubt. Während ein unbeabsichtigtes Verschieben des Auswahlelements ausgeschlossen ist, wird ein Verschieben des Auswahlelements zum Zwecke der Zuordnung zu einer ausgewählten Referenzmarke nicht durch Verunreinigungen erschwert. Des weiteren können auch von außen nicht sichtbare Auswahlelemente, die beispielsweise im Inneren einer gekapselten Meßeinrichtung angeordnet sind, durch Abzählen der seitlich entnommenen und wieder eingesetzten Füllelemente eindeutig einer gewünschten Referenzmarke zugeordnet werden.

Vorteilhafte Ausbildungen der Erfindung entnimmt man den Ansprüchen 2 bis 15.

In der Zeichnung sind Ausführungsbeispiele der Erfindung dargestellt.

Es zeigen

Figur 1 schematisch eine inkrementale Meßeinrichtung,

Figur 2 eine Draufsicht auf den Maßstab,

Figuren 3a und 3b eine gekapselte Meßeinrichtung,

Figur 4 eine Draufsicht auf einem Maßstab und eine Abtasteinheit,

Figur 5 eine weitere Draufsicht auf einen Maßstab und eine Abtasteinheit,

Figur 6 einen Querschnitt einer weiteren gekapselten Meßeinrichtung und

Figur 7 ein Füllelement.

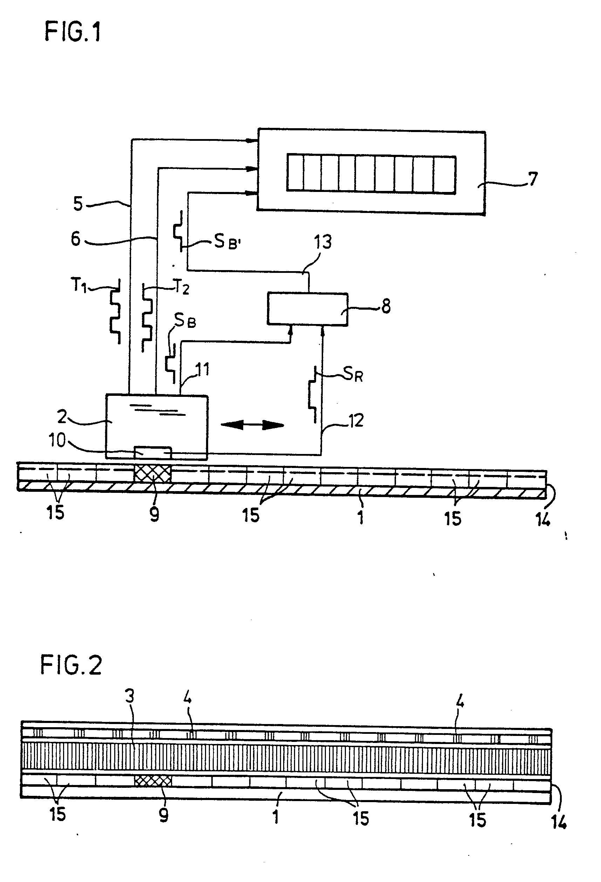

In Figur 1 ist schematisch eine lichtelektrische inkrementale Längenmeßeinrichtung gezeigt, die aus einem Maßstab 1 und einer Abtasteinheit 2 besteht, die jeweils mit zu messenden Objekten einer Maschine verbunden sind. Auf dem Maßstab 1 ist eine Teilung 3 in Form eines Strichgitters (Figur 2) aufgebracht, das im Auflicht photoelektrisch berührungsfrei abgetastet wird. Entlang der Teilung 3 ist auf dem Maßstab 1 eine Reihe von äquidistanten Referenzmarken 4 vorgesehen, die jeweils aus Strichgruppen mit einer bestimmten Strichverteilung bestehen. Die durch die Abtastung des Strichgitters 3 erzeugten periodischen Abtastsignale, die in der Abtasteinheit 2 verstärkt und in Rechtecksignale $T_1$, $T_2$ umgeformt werden, steuern über elektrische Leitungen 5, 6 einen elektronischen Zähler 7, der die Meßwerte in digitaler Form anzeigt. Die um ein Viertel der Gitterkonstanten der Teilung 3 zueinander phasenverschobenen Rechtecksignale $T_1$, $T_2$ dienen der Diskriminierung der Abtastrichtung. Das an den Referenzmarken 4 erzeugte Signal wird in der Abtasteinheit 2 verstärkt, in ein Rechtecksignal $S_B$ umgeformt und über eine Leitung 11 einer elektronischen Baueinheit 8 zugeführt.

Die Auswahl derjenigen Referenzmarke 4, die beim Meßvorgang zur Wirkung gelangen soll, erfolgt durch Zuordnung eines Auswahlelements in Form eines Magneten 9, dessen Magnetfeld bei Annäherung der Abtasteinheit 2 ein darauf befindliches Schaltmittel in Form eines Reed-Schalters 10 ansteuert, dessen Ausgangssignal $S_R$ auf einer Leitung 12 gleichfalls der elektronischen Baueinheit 8 zugeleitet wird. Nur, wenn die Signale $S_B$, $S_R$ auf den Leitungen 11, 12 gleichzeitig an den Eingängen der elektronischen Baueinheit 8 anliegen, wird auf deren Ausgangsleitung 13 ein Signal $S_B'$ dem elektronischen Zähler 7 zugeführt, der dadurch zum Beispiel auf den Zahlenwert "Null" gesetzt wird. Der Magnet 9 ist zwecks Zuordnung zu einer ausgewählten Referenzmarke 4 in einer T-förmigen Nut 14 des Maßstabs 1 in Meßrichtung verschiebbar. Die formschlüssige Fixierung der Lage des Magneten 9 bezüglich der betreffenden Referenzmarke 4 wird durch Füllelemente 15 bewirkt, deren Länge dem Abstand der Referenzmarken 4 auf dem Maßstab 1 entspricht. Die Länge des Magneten 9 ist derart bemessen, daß die gesamte Länge der Nut 14 vom Magneten 9, und von den Füllelementen 15 ausgefüllt wird, wobei die maximale Länge des Magneten 9 dem Abstand der Referenzmarken 4 entspricht. Eine Zuordnung des Magneten 9 zu einer anderen Referenzmarke 4 erfolgt in der Weise, daß entsprechend viele Füllelemente 15 auf der einen Seite der Nut 14 entnommen und auf der anderen Seite der Nut 14 nachgeschoben werden. Die Füllelemente 15 sind an den Enden der Nut 14 in nicht gezeigter Weise gegen ein Herausfallen gesichert.

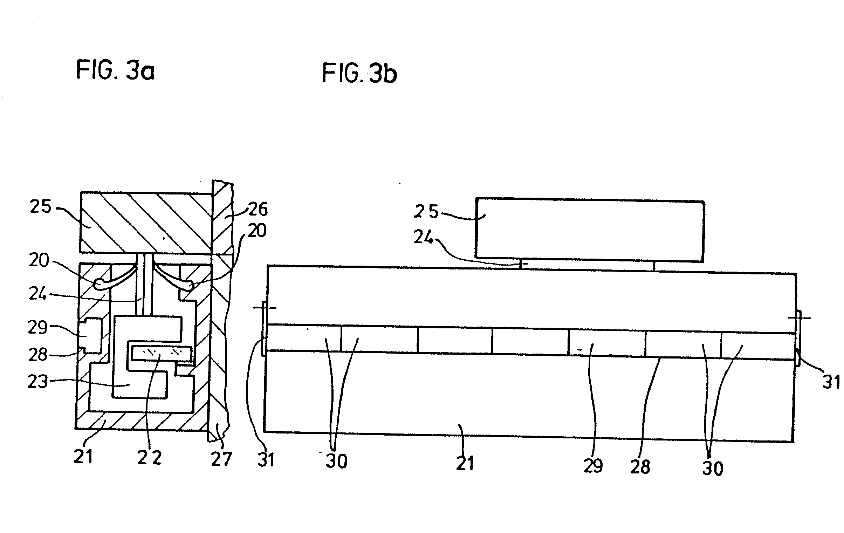

In Figur 3a, b ist in einem Querschnitt und in einer Draufsicht eine gekapselte Längenmeßeinrichtung bekannter Bauart mit einem durch Dichtlippen 20 verschlossenen Gehäuse 21 gezeigt, in dem ein Maßstab 22 von einer Abtasteinheit 23 abgetastet wird, die über einen Mitnehmer 24 und ein Montageelement 25 am Schlitten 26 einer nicht gezeigten Maschine befestigt ist; das Aluminium-Gehäuse 21 ist mit dem Bett (27) der Maschine verbunden.

In einer T-förmigen Nut 28 in der der Maschine abgewandten Seite des Gehäuses 21 ist ein Auswahlelement in Form eines Magneten 29 einer nicht gezeigten Referenzmarke zugeordnet; die übrige Nut 28 ist mit Füllelementen 30 vollständig ausgefüllt. Eine Änderung der Zuordnung des Magneten 29 zu einer anderen Referenzmarke erfolgt in der vorher angegebenen Weise. Die Füllelemente 30 sind an den Enden der Nut 28 durch schwenkbare Platten 31 gegen ein Herausfallen gesichert.

Durch die formschlüssige Fixierung der Magnete 9, 29 in den Nuten 14, 28 mittels der Füllelemente 15, 30 ist ein unbeabsichtigtes Verschieben der Magnete 9, 29 ausgeschlossen, da die Nuten 14, 28 vollständig ausgefüllt sind. Es können sich daher auch keine Verunreinigungen in den Nuten 14, 28 ansammeln, die eine Verstellung der Magnete 9, 29 erschweren würden.

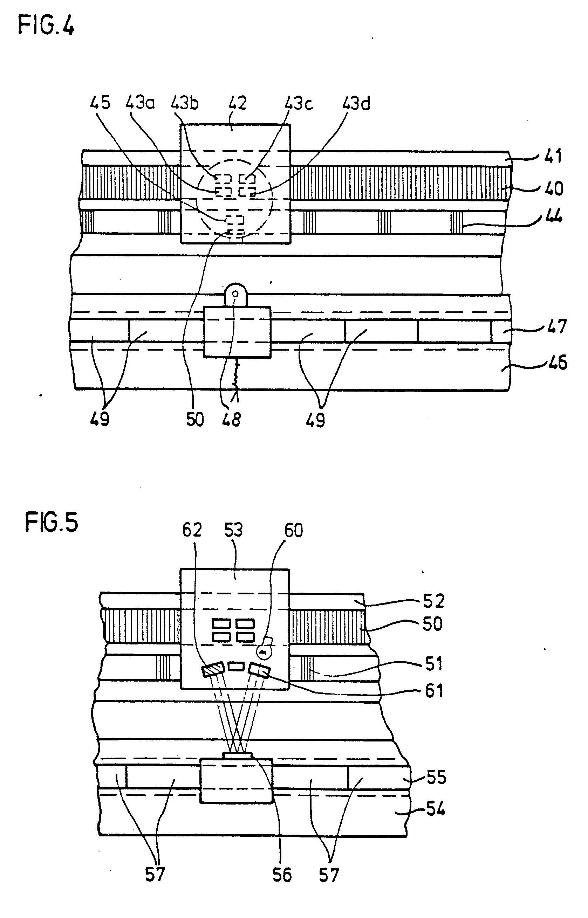

In der Figur 4 werden die Teilung 40 eines maßstabs 41 von einer Abtasteinheit 42 mittels Abtastelementen 43a—43d und eine Reihe von Referenzmarken 44 von einem weiteren Abtastelement 45 abgetastet. Der Maßstab 41 ist an einem Träger 46 befestigt, der eine parallel zur Teilung 40 verlaufende Führungsnut 47 mit T-förmigen Querschnitt aufweist, in der ein Auswahlelement in Form einer Lampe 48 einer ausgewählten Referenzmarke 44 in Meßrichtung verschiebbar zugeordnet werden kann. In der Führungsnut 47 sind zur formschlüssigen Fixierung der Lage der Lampe 48 bezüglich einer ausgewählten Referenzmarke 44 ebenfalls Füllelemente 49 vorgesehen, die die übrige Nut 47 vollständig ausfüllen und in nicht gezeigter Weise an den Enden der Nut 47 gegen ein Herausfallen gesichert sind. Bei der Abtastung der ausgewählten Referenzmarke 44 fällt das Licht der Lampe 48 auf ein Photoelement 50 in der Abtasteinheit 42, so daß diese Referenzmarke 44 zur Wirkung gelangt. Eine Zuordnung der Lampe 48 zu einer anderen Referenzmarke 44 erfolgt in der vorgehend beschriebenen Weise.

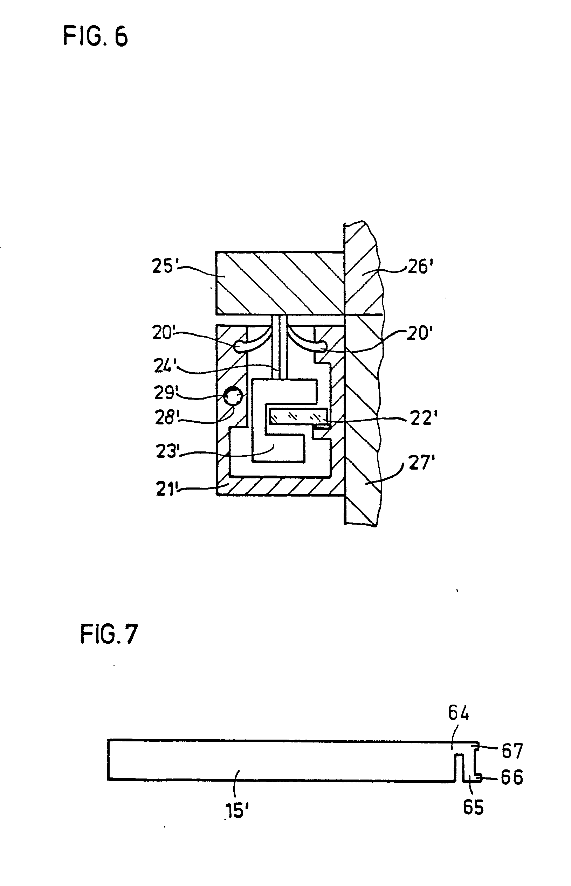

In der Figur 5 werden die Teilung 50 und die Reihe von Referenzmarken 51 eines Maßstabs 52 von einer Abtasteinheit 53 abgetastet. Der Maßstab 52 ist an einem Träger 54 befestigt, der eine Führungsnut 55 mit T-förmigem Querschnitt zur Verschiebung eines Auswahlelements in Form eines Spiegels 56 in Meßrichtung zur Zuordnung zu einer gewählten Referenzmarke 51 aufweist. Zur formschlüssigen Fixierung der Lage des Spiegels 56 bezüglich einer ausgewählten Referenzmarke 51 sind gleichfalls Füllelemente 57 vorgesehen, die die übrige Nut 55 vollständig ausfüllen und in nicht gezeigter Weise an den Enden der Nut 55 gegen ein Herausfallen gesichert sind. Bei der Abtastung der ausgewählten Referenzmarke 51 durch die Abtasteinheit 53 fällt das Licht der Lampe 60 über einen Kondensor 61 in der Abtasteinheit 53 und den Spiegel 56 auf ein Photoelement 62 in der Abtasteinheit 53, so daß diese Referenzmarke 51 zur Wirkung gelangt. Eine Zuordnung zu einer anderen Referenzmarke 51 erfolgt in der vorher angegebenen Weise.

In der Figur 6 ist eine weiter gekapselte Längenmeßeinrichtung im Querschnitt entsprechend der Figur 3a gezeigt, in der die gleichen Bauelemente mit denselben, jedoch gestrichenen Bezugszeichen versehen sind. In einer Bohrung 28' in der der Maschine abgewandten Wandung eines Gehäuses 21' ist ein Auswahlelement in Form eines zylinder-förmigen Magneten 29' einer nicht gezeigten Referenzmarke zugeordnet. Die übrige Bohrung 28' ist in nicht dargestellter Weise mit Füllelementen vollständig ausgefüllt, die an den Enden der Bohrung 28' gegen ein Herausfallen gesichert sind. Die Änderung der Zuordnung des Magneten 29' erfolgt in der vorher angegebenen Weise. Obwohl der Magnet 29' von außen nicht sichtbar ist, erfolgt eine eindeutige Zuordnung des Magneten 29' zu jeder gewünschten Referenzmarke durch Abzählen der an den Enden der Bohrung 28' entnommenen und wieder eingesetzten Füllelemente.

Da die Auswahlelemente 9; 29; 29'; 48; 56 nicht durch Reibschluß, sondern durch Formschluß fixiert sind, tritt kein Verschleiß auf. Die Füllelemente 15; 30; 49; 57 bestehen bevorzugt aus Kunststoff; die Länge der Füllelemente kann auch ein ganzzahliges Vielfaches des Abstandes der Referenzmarken betragen, wenn von den vorhandenen Referenzmarken nur bestimmte Referenzmarken zur Auwahl gelangen sollen; des weiteren kann die Länge der Füllelemente auch nur bestimmte Teile des Abstandes der Referenzmarken betragen.

Anstelle eines Reed-Schalters 10 als Schaltmittel kann auch eine Feldplatte Verwendung finden. Es können auch mehrere Auswahlelemente 9; 29; 29'; 48; 56 jeweils einer Referenzmarke 4; 44; 51 zugeordnet sein; es können auch induktive und kapazitive Auswahlelemente Verwendung finden.

Die Füllelemente 15; 30; 49, 57 sind aus fertigungstechnischen Gründen mit gewissen Längentoleranzen behaftet. Zum Ausgleich dieser Längentoleranzen wird vorgeschlagen, die Füllelemente 15; 30; 49; 57 an wenigstens einer Stelle in Längsrichtung federnd oder elastisch auszubilden. In Figur 7 ist ein Füllelement 15' gezeigt, das an einem Ende eine infolge einer Querschnittsverengung 64 federnde Zunge 65 mit einem Vorsprung 66 aufweist. Im unbelasteten Zustand bestimmt der Vorsprung 66 die maximale Länge des Füllelements 15; während im belasteten Zustand der Federweg der Zunge 65 durch einen Vorsprung 67 begrenzt wird, der die minimale Länge des Füllelements 15' bestimmt. Die maximale Länge des Füllelements 15' wird etwas größer als die gewünschte Sollänge des Füllelements 15' gewählt, so daß Längentoleranzen auf einfache Weise ausgeglichen werden können.

Die Erfindung ist nicht auf eine lichtelektrische Meßeinrichtung beschränkt, sondern auch bei magnetischen, induktiven und kapazitiven Meßeinrichtungen mit Erfolg anwendbar.

Die Erfindung läßt sich sinngemäß auch bei absoluten Meßeinrichtungen (Codegebern) einsetzen, die Inkrementalspuren aufweisen.

**Patentansprüche**

1. Meßeinrichtung, insbesondere inkrementale Meßeinrichtung, mit einer entlang der Teilung (3; 40; 50) eines Maßstabs (1; 22; 22'; 41; 52) vorgesehenen Reihe von Referenzmarken (4; 44; 51), die der Teilung (3; 40; 50) fest zugeordnet sind und an denen im Zusammenwirken mit einer Abtasteinheit (2; 23; 23'; 42; 53) reproduzierbar elektrische Impulse ($S_B$) erzeugt werden, die einen elektronischen Zähler (7) der Meßeinrichtung oder eine Steuereinrichtung (8) beaufschlagen, wobei mindestens ein Auswahlelement (9; 29; 29'; 48; 56) für die Referenzmarken (4; 44; 51) auf dem Maßstab (1; 22; 22'; 41; 52) selbst oder in dessen unmittelbarer Nähe in Bewegungsrichtung der Abtasteinheit (2; 23; 23'; 42; 53) verschiebbar angeordnet und jeweils einer Referenzmarke (4; 44; 51) zuordenbar ist, und zur Herstellung eines Wirkzusammenhangs mit einem an der Abtasteinheit (2; 23; 23'; 42; 53) oder an einem Träger (46; 54) der Abtasteinheit (2; 23; 23'; 42; 53) vorhandenen elektrischen Schaltmittel (10; 50; 62) dient, so daß eine oder mehrere Referenzmarken (4; 44; 51) ausgewählt und zur Wirkung gebracht werden, dadurch gekennzeichnet, daß die Lage des mindestens einen Auswahlelements (9; 29; 29'; 48; 56) zur jeweils ausgewählten Referenzmarke (4; 44; 51) durch angrenzende, in Bewegungsrichtung der Abtasteinheit (2; 23; 23'; 42; 53) aneinandergereihte Füllelemente (15; 30; 49; 57) vorbestimmter, gleicher Länge formschlüssig fixierbar ist, wobei die Endelemente der Reihe aus dem mindestens einen Auswahlelement (9; 29; 29'; 48; 56) und den Füllelementen (15; 30; 49; 57) durch Halteelemente (31) beaufschlagt sind.

2. Meßeinrichtung nach Anspruch 1, dadurch gekennzeichnet, daß die Länge der Füllelemente (15; 30; 49; 57) zur formschlüssigen Fixierung der Lage des Auswahlelements (9; 29; 29'; 48; 56) (4; 44; 51) an einer (14; 28; 28'; 47; 55) dem Abstand der Referenzmarken (4; 44; 51) entspricht und daß die Länge des Auswahlelements (9; 29; 29'; 48; 56) derart bemessen ist, daß die gesamte Länge der Führung (14; 28; 28'; 47; 55) vom Auswahlelement (9; 29; 29'; 48; 56) und von den Füllelementen (15; 30; 49; 57) ausgefüllt ist, wobei die maximale Länge des Auswahlelements (9; 29; 29'; 48; 56) dem Abstand der verwendeten äquidistanten Referenzmarken (4; 44; 51) entspricht.

3. Meßeinrichtung nach Anspruch 1, dadurch gekennzeichnet, daß die Länge der Füllelemente ein ganzzahliges Vielfaches des Abstandes der Referenzmarken bzw. einen Teil des Abstandes der Referenzmarken beträgt.

4. Meßeinrichtung nach Anspruch 1 oder 2, dadurch gekennzeichnet, daß das Auswahlelement durch einen Magneten (9; 29; 29') gebildet ist.

5. Meßeinrichtung nach Anspruch 1 oder 2, dadurch gekennzeichnet, daß das Auswahlelement durch eine Lampe (48) gebildet ist.

6. Meßeinrichtung nach Anspruch 1 oder 2, dadurch gekennzeichnet, daß das Auswahlelement durch einen Spiegel (56) gebildet ist.

7. Meßeinrichtung nach Anspruch 1 oder 2, dadurch gekennzeichnet, daß ein induktives Auswahlelement vorgesehen ist.

8. Meßeinrichtung nach Anspruch 1 oder 2, dadurch gekennzeichnet, daß ein kapazitives Auswahlelement vorgesehen ist.

9. Meßeinrichtung nach einem der Ansprüche 1 bis 3, dadurch gekennzeichnet, daß das Füllelement (15; 30; 49; 57) aus Kunststoff besteht.

10. Meßeinrichtung nach Anspruch 2, dadurch gekennzeichnet, daß die Führung (14; 28; 47; 55) aus einer T-förmigen Nut besteht.

11. Meßeinrichtung nach Anspruch 2, dadurch gekennzeichnet, daß die Führung (28') aus einer Bohrung besteht.

12. Meßeinrichtung nach Anspruch 1, dadurch gekennzeichnet, daß das Schaltmittel durch einen Reedschalter (10) oder eine Feldplatte gebildet ist.

13. Meßeinrichtung nach Anspruch 1, dadurch gekennzeichnet, daß das Schaltmittel durch ein Photoelement (50; 62) gebildet ist.

14. Meßeinrichtung nach einem der Ansprüche 1 bis 3, dadurch gekennzeichnet, daß das Füllelement (15; 15'; 30; 49; 57) an wenigstens einer Stelle in Längsrichtung federnd ausgebildet ist.

15. Meßeinrichtung nach Anspruch 14, dadurch gekennzeichnet, daß das Füllelement (15') an einem Ende eine federnde Zunge (65) aufweist.

**Revendications**

1. Dispositif de mesure, notamment dispositif de mesure incrémental, comportant une série de marques de référence (4; 44; 51) prévues le long de la graduation (3; 40; 40) d'une règle graduée (1; 22; 22'; 41; 52), lesquelles sont associées de façon fixe à la graduation et au moyen desquelles sont engendrées, en coopération avec une unité de lecture (2; 23; 23'; 42; 53), des impulsions électriques ($S_B$) reproductibles qui attaquent un compteur électronique (7) du dispositif de mesure ou un dispositif de commande (8), au moins un élément de sélection (9; 29; 29'; 48; 56) pour les marques de référence (4; 44; 51) étant agencé sur la règle graduée proprement dite (1; 22; 22'; 41; 52), ou à proximité immédiate de celle-ci, de manière à pouvoir être déplacé dans la direction du mouvement de l'unité de lecture (2; 23; 23'; 42; 53) pour pouvoir être associé à chaque fois à une marque de référence (4; 44; 51), et servant à réaliser une coopération fonctionnelle avec un organe de commutation électrique présent sur l'unité de lecture (2; 23; 23'; 42; 53) ou sur un support (46; 54) de celle-ci, de manière à sélectionner une ou plusieurs marques de référence (4; 44; 51) et à leur faire prendre effet, caractérisé par le fait que la position dudit élément de sélection (9; 29; 29'; 48; 56) par rapport à la marque de référence sélectionnée (4; 44; 51) peut être fixée par conjugaison de formes au moyen d'éléments de remplissage (15; 30; 49; 57) de longueur identique prédéterminée agencés les uns à la suite des autres, les éléments extrêmes de la rangée constitué d'au moins un élément de sélection (9; 29; 29'; 48; 56) et des éléments de remplissage (15; 30; 49; 57) étant arrêtés par des éléments de maintien (31).

2. Dispositif de mesure selon revendication 1, caractérisé par le fait que la longueur des éléments de remplissage (15; 30; 49; 57) pour la fixation, par conjugaison de formes, de la position de l'élément de sélection (9; 29; 29'; 48; 56) sur un guide (14; 28; 28'; 47; 55) correspond à l'intervalle des marques de référence (4; 44; 51) et par le fait que la longueur de l'élément de sélection (9; 29; 29'; 48; 56) est d'une valeur telle que toute la longueur du guide (14; 28; 28'; 47; 55) est occupée par l'élément de sélection (9; 29; 29'; 48; 56) et par des éléments de remplissage (15; 30; 49; 57), la longueur maximale de l'élément de sélection (9; 29; 29'; 48; 56) correspondant à l'intervalle des marques de référence équidistantes utilisées (4; 44; 51).

3. Dispositif de mesure selon la revendication 1, caractérisé par le fait que la longueur des éléments de remplissage est un multiple entier de l'intervalle des marques de référence, ou une fraction de l'intervalle des marques de référence.

4. Dispositif de mesure selon la revendication 1 ou 2, caractérisé par le fait que l'élément de sélection est constitué par un aimant (9; 29; 29').

5. Dispositif de mesure selon revendication 1 ou 2; caractérisé par le fait que l'élément de sélection est constitué par une lampe (48).

6. Dispositif de mesure selon revendication 1 ou 2, caractérisé par le fait que l'élément de sélection est constitué par un miroir (56).

7. Dispositif de mesure selon revendication 1 ou 2, caractérisé par un élément de sélection inductif.

8. Dispositif de mesure selon revendication 1 ou 2, caractérisé par un élément de sélection capacitif.

9. Dispositif de mesure selon l'une des revendication 1 à 3, caractérisé par le fait que l'élément de remplissage (15; 30; 49; 57) est en matière plastique.

10. Dispositif de mesure selon revendication 2, caractérisé par le fait que le guide (14; 28; 47; 55) est constitué par une rainure à profil en T.

11. Dispositif de mesure selon revendication 2, caractérisé par le fait que le guide (28') est constitué par un alésage.

12. Dispositif de mesure selon revendication 1, caractérisé par le fait que l'organe de commutation est constitué par un contact reed (10) ou par une magnétorésistance.

13. Dispositif de mesure selon revendication 1, caractérisé par le fait que l'organe de commutation est constitué par un élément photosensible (50; 62).

14. Dispositif de mesure selon l'une des revendications 1 à 3, caractérisé par le fait que l'élément de remplissage (15; 15'; 30; 49; 57) est aménagé de manière à être déformable élastiquement en direction longitudinale, en au moins un endroit.

15. Dispositif de mesure selon revendication 14, caractérisé par le fait que l'élément de remplissage (15') présente, à une extrémité, une languette déformable élastiquement (65).

**Claims**

1. Measuring device, especially incremental measuring device, with a series of reference marks (4; 44; 51) provided along the graduation (3; 40; 50) of a measuring scale (1; 22; 22'; 41; 52), which are fixedly associated with the graduation (3; 40; 50) and from which reproducible electrical pulses ($S_B$) are generated in conjunction with a sensing unit (2; 23; 23'; 42; 53), which pulses act on an electronic counter (7) of the measuring device or a control device (8), wherein at least one selector element (9; 29; 29'; 48; 56) for the reference marks (4; 44; 51) is arranged displaceably in the direction of movement of the sensing unit (2; 23; 23'; 42; 53) on the measuring scale (1; 22; 22'; 41; 52) itself or in its immediate vicinity, and each is associated with a reference mark (4; 44; 41) and serves to effect an operative relationship with an electrical switch means (10; 50; 62) provided on the sensing unit (2; 23; 23'; 42; 53) or on a carrier (46; 54) of the sensing unit (2; 23; 23'; 42; 53), so that one or more reference marks (4; 44; 51) can be selected and brought into operation, characterized in that the position of the at least one selector element (9; 29; 29'; 48; 56) for each selected reference mark (4; 44; 51) is fixable in interlocking manner by contiguous filler elements (15; 30; 49; 57) of predetermined, like length serially arranged in the direction of movement of the sensor unit (2; 23; 23'; 42; 53), wherein the end elements of the series of the at least one selector element (9; 29; 29'; 48; 56) and the filler elements (15; 30; 49; 57) are acted upon by retaining elements (31).

2. Measuring device according to claim 1, characterized in that the length of the filler elements (15; 30; 49; 57) for interlocking fixing of the position of the selector element (9; 29; 29'; 48; 56) on a guide (14; 28; 28'; 47; 55) corresponds to the spacing of the reference marks (4; 44; 51) and in that the length of the selector element (9; 29; 29'; 48; 56) is so determined that the total length of the guide (14; 28; 28'; 47; 55) is filled with the selector element (9; 29; 29'; 48; 56) and the filler elements (15; 30; 49; 57), wherein the maximum length of the selector element (9; 29; 29'; 48; 56) corresponds to the spacing of the equidistant reference marks (4; 44; 51) which are used.

3. Measuring device according to claim 1, characterized in that the length of the filler elements amounts to an integral multiple of the spacing of the reference marks or a fraction of the spacing of the reference marks.

4. Measuring device according to claim 1 or 2, characterized in that the selector element is formed by a magnet (9; 29; 29').

5. Measuring device according to claim 1 or 2, characterized in that the selector element is formed by a lamp (48).

6. Measuring device according to claim 1 or 2, characterized in that the selector element is formed by a mirror (56).

7. Measuring device according to claim 1 or 3, characterized in that there is provided an inductive selector element.

8. Measuring device according to claim 1 or 2, characterized in that there is provided a capacitive selector element.

9. Measuring device according to one of claims 1 to 3, characterized in that the filler element (15; 30; 49; 57) consist of plastics material.

10. Measuring device according to claim 2, characterized in that the guide (14; 28; 47; 55) consists of a T-shaped groove.

11. Measuring device according to claim 2, characterised in that the guide (28') consists of a bore.

12. Measuring device according to claim 1, characterized in that the switch means is formed from a reed switch (10) or a field plate.

13. Measuring device according to claim 1, characterized in that the switch means is formed by a photo element (50 62).

14. Measuring device according to one of claims 1 to 3, characterized in that the filler element (15; 15'; 30; 49; 57) is resiliently formed at at least one position in the longitudinal direction.

15. Measuring device according to claim 14, characterized in that the filler element (15') comprises a resilient tongue (65) at one end.

FIG.1

FIG.2

FIG. 3a

FIG. 3b

0 085 787

FIG.4

FIG.5

FIG. 6

25'
26'
20'
20'
24'
29'
28'
22'
23'
21'
27'

FIG. 7

64
67
66
65
15'